# EUROPÄISCHE PATENTANMELDUNG

(11) **EP 0 816 865 A2**
(43) Veröffentlichungstag der Anmeldung: **07.01.1998**
(21) Anmeldenummer: 97109967.6
(22) Anmeldetag: 18.06.1997
(51) Int. Cl.: G01S 7/52

(54) **Verfahren zum Selbsttest einer Einrichtung zur Ultraschall-Laufzeitmessung sowie Einrichtung zur Durchführung des Verfahrens**

(30) Priorität: 26.06.1996 DE 19625667
(71) Anmelder: SIEMENS AKTIENGESELLSCHAFT, 80333 München (DE)
(72) Erfinder: Kroemer, Nils, 09337 Hohenstein-Ernstthal (DE)

(57) **Zusammenfassung**

Zum Selbsttest einer Einrichtung zur Ultraschall-Laufzeitmessung, insbesondere eines Ultraschall-Durchflußmessers, wird das Ausschwingverhalten eines Ultraschallwandlers (1, 2) nach einem Sendevorgang ausgewertet und daraus zumindest ein Signalformparameter ermittelt. Dieser wird auf Einhalten eines Fehlerkriteriums überprüft und bei Verletzen des Fehlerkriteriums eine Fehlermeldung zur Fehleranzeige ausgegeben. Dadurch können bei Ultraschall-Durchflußmessern Fehler der Übertragungsstrecke von Fehlern der Ultraschallwandler unterschieden werden.

Die Erfindung wird angewandt bei Ultraschall-Durchflußmessern.

## Beschreibung

Die Erfindung betrifft ein Verfahren zum Selbsttest einer Einrichtung zur Ultraschall-Laufzeitmessung, insbesondere eines Ultraschall-Durchflußmessers, nach dem Oberbegriff des Anspruchs 1 sowie eine Einrichtung zur Durchführung des Verfahrens nach dem Oberbegriff des Anspruchs 11.

Aus der EP-PS 0 521 855 ist ein Verfahren zur Ultraschall-Laufzeitmessung bekannt, das darauf beruht, daß von einem Sendewandler ein pulsförmiges Schallsignal in ein Meßmedium eingekoppelt und nach dem Durchlaufen einer Meßstrecke von einem Empfangswandler detektiert wird. Die Schallaufzeit ist die Zeitdifferenz zwischen dem Sendevorgang und dem Eintreffen des Ultraschallsignals am Empfangsort.

Die Ultraschall-Laufzeitmessung ist für vielfältige Meßaufgaben einsetzbar. Hierzu zählen beispielsweise die Abstandsmessung sowie die Durchflußmessung in gasförmigen oder flüssigen Medien.

Bei der Ultraschall-Durchflußmessung senden sich zwei in Strömungsrichtung versetzt angebrachte Ultraschallwandler alternierend pulsförmige Schallsignale zu, die je nach Richtung durch das strömende Medium beschleunigt oder verzögert werden. Die Umschaltung der Wandler zwischen Sende- und Empfangsbetrieb (Kommutierung) geschieht üblicherweise mittels elektromechanischer oder elektronischer Schaltelemente. Fur die Kommutierung wird von einer Steuereinheit in der Regel nur ein einziges Steuersignal bereitgestellt, da eine feste Zuordnung der Stellung der einzelnen Schaltelemente bei den Messungen der Ultraschallaufzeiten stromauf oder stromab besteht.

Ein anderes typisches Anwendungsgebiet ist die zerstörungsfreie Werkstoffprüfung, zu der im weiteren Sinne auch die Wanddickenmessung gehört.

Bei Abstandssensoren gibt es Anordnungen mit separaten Sende- und Empfangswandlern sowie mit einem einzigen Schallwandler, welcher wechselseitig im Sende- und im Empfangsbetrieb arbeitet.

Bei praktischen Meßaufgaben kommt es häufig vor, daß den Empfangswandler mehrere Ultraschallsignale zeitlich versetzt erreichen. Ursache können Reflexionen an störenden Objekten innerhalb des Erfassungsbereichs des Sensors oder parasitäre Schallwege sein. Die Selektion eines ausgewählten Ultraschallsignals erfolgt üblicherweise über ein Steuersignal, mit welchem das Empfangssignal während eines Meßfensters freigeschaltet wird.

Aus der DE-OS 43 08 373 ist ein Verfahren zur Klassifizierung von akustischen Signalen bekannt. Damit können einzelne oder mehrere kombinierte Signalformparameter, z. B. Amplitude, Energieinhalt, Ein- oder Ausschwingzeit oder Trägerfrequenz, eines akustischen Signals bewertet werden. Anhand derartiger Parameter lassen sich sowohl Aussagen über das Übertragungsmedium oder das reflektierende Objekt als auch über die Eigenschaften der Ultraschallwandler ableiten.

In der Praxis tritt häufig der Fall auf, daß innerhalb eines vorgegebenen zeitlichen Erwartungsintervalls kein Empfangssignal detektiert wird. Die Ursache dafür kann in einem Sensordefekt liegen oder die Schallübertragung auf der Meßstrecke ist derart gestört, daß das abgestrahlte Schallsignal beispielsweise wegen zu hoher Mediendämpfung, fehlerhafter Strahlführung oder destruktiven Interferenzen an einem reflektierenden Objekt nicht zum Empfänger gelangt. Bei der Durchflußmessung in Flüssigkeiten kann die Übertragung insbesondere durch eine Teilbefüllung des Meßrohres oder einen hohen Gas- oder Fremdstoffanteil unterbrochen sein. Nachteilig dabei ist, daß nicht unterschieden werden kann, ob das Fehlen eines Empfangssignals auf einen Sensordefekt oder auf die Unterbrechung der Übertragungsstrecke zurückzuführen ist.

Der Erfindung liegt die Aufgabe zugrunde, ein Verfahren zu finden, das einen Selbsttest der Ultraschallwandler in einer Einrichtung zur Ultraschall-Laufzeitmessung, insbesondere einem Ultraschall-Durchflußmesser, ermöglicht, sowie eine Einrichtung zur Durchführung des Verfahrens zu schaffen. Dadurch soll eine sichere und rasche Separation von Sensordefekten und Störungen der Schallübertragungsstrecke erlaubt werden. Zudem soll durch eine quasi-kontinuierliche Sensorüberwachung ein Beitrag zur Schadensfrüherkennung geleistet werden, durch welche einem Anwender bereits frühzeitig Informationen über die Gefahr eines bevorstehenden Ausfalls der Meßeinrichtung gegeben werden.

Zur Lösung dieser Aufgabe weist das neue Verfahren der eingangs genannten Art die im kennzeichnenden Teil des Anspruchs 1 genannten Merkmale auf. Vorteilhafte Weiterbildungen des Verfahrens sind in den Unteransprüchen 2 bis 10 beschrieben. Eine Einrichtung zur Durchführung des neuen Verfahrens ist in Anspruch 11 angegeben, vorteilhafte Ausgestaltungen dieser Einrichtung in den abhängigen Ansprüchen 12 bis 15.

Bei dem neuen Verfahren bzw. der neuen Einrichtung wird die Erkenntnis ausgenutzt, daß Ultraschallwandler stets eine mehr oder weniger ausgeprägte mechanische Schwingungsgüte aufweisen, welche dazu führt, daß beispielsweise ein Sendewandler nach dem Ende der elektrischen Anregung in charakteristischer Weise nachschwingt. Dieses Nachschwingen ist vor allem bei solchen Anwendungen unerwünscht, wo ein einziger Schallwandler alternierend als Sender und Empfänger arbeitet, da ein Empfangssignal erst detektiert werden kann, wenn die Schwingungen des Sendevorgangs hinreichend abgeklungen sind.

Das Ausschwingverhalten des Ultraschallwandlers, das bisher als störend empfunden wurde, wird nun zum Selbsttest des Ultraschallwandlers ausgewertet.

Die Erfindung hat den Vorteil, daß für die Selbsttestfunktion nur geringe Zeit beansprucht und so eine quasi-kontinuierliche Sensorüberwachung ermöglicht wird. Ohne merkliche Beeinträchtigungen des Meßbetriebs kann in vorgegebenen Zeitabständen auf eine Betriebsart "Diagnose" umgeschaltet werden. Auch Langzeitveränderungen des Verhaltens von Ultraschallwandlern über ihre Standzeit hinweg können erkannt und zur Schadensfrüherkennung herangezogen werden. Durch die sichere Unterscheidung von Sensordefekten und Störungen der Meßstrecke wird eine genauere Einordnung der Fehler und ein Einleiten der jeweils wirkungsvollen Fehlerbehandlungsmaßnahmen möglich. Bei Ultraschall-Durchflußmessern ist weiterhin von Vorteil, daß unzulässige Asymmetrien der Ultraschallwandler erkannt und dadurch Informationen über eine eingeschränkte Meßgenauigkeit gewonnen werden können. Zudem ist der äußerst geringe, durch die zusätzliche Selbsttestfunktion begründete Schaltungsaufwand und die Durchführbarkeit des Verfahrens mit weitgehend ohnehin für eine Ultraschall-Laufzeitmessung vorhandenen Mitteln von Vorteil.

Anhand der Zeichnungen, in denen ein Ausführungsbeispiel der Erfindung dargestellt ist, werden im folgenden Ausgestaltungen und Vorteile näher erläutert.

Es zeigen:
- Figur 1: ein Prinzipschaltbild eines Ultraschall-Durchflußmessers und
- Figur 2: beispielhafte Zeitverläufe der in Figur 1 vorkommenden Signale in einem Zeitdiagramm.

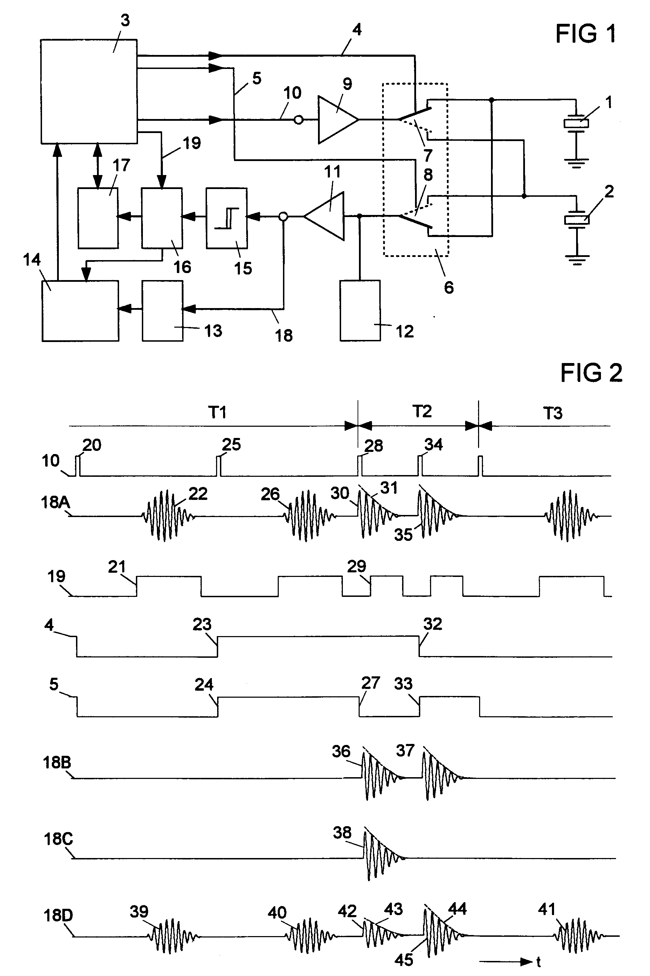

Ein Ultraschall-Durchflußmesser, der nach dem Laufzeitdifferenzprinzip arbeitet, weist entsprechend Figur 1 zumindest zwei Ultraschallwandler 1 und 2 auf. Diese werden gesteuert durch einen Mikrocontroller 3, der hierzu zwei Steuersignale 4 und 5 ausgibt, über einen Kommutator 6 mit zwei Schaltern 7 und 8 wahlweise mit einer Sende- oder einer Empfangsschaltung verbunden. Für eine Laufzeitmessung stromauf ist beispielsweise der Schalter 7 wie eingezeichnet gelegt, der Schalter 8 dagegen in der umgekehrten Position, so daß der Ultraschallwandler 1 mit der Sendeschaltung und der Ultraschallwandler 2 mit der Empfangsschaltung verbunden ist. Für eine Laufzeitmessung stromab wird dagegen der Ultraschallwandler 2 mit der Sendeschaltung und der Ultraschallwandler 1 mit der Empfangsschaltung verbunden. Als Sendeschaltung ist in Figur 1 ein Verstärker 9 eingezeichnet, der von dem Mikrocontroller 3 einen Sendeimpuls auf einem Steuersignal 10 erhält. Die Empfangsschaltung wird aus einem Empfangsverstärker 11, einer Pegelbegrenzungsschaltung 12, einem Demodulator 13, einer Schaltung zur Hüllkurvenauswertung 14, einem Empfangskomparator 15, einer Torschaltung 16 und einem Zähler 17 gebildet.

Bei direkter Kopplung von Sende- und Empfangsschaltung muß die Amplitude am Eingang des Empfangsverstärkers 11 begrenzt werden. Hierzu wird die Pegelbegrenzungsschaltung 12 eingesetzt, die beispielsweise antiparallel geschaltete Dioden enthält. Diese Schaltung ist im normalen Meßbetrieb unwirksam, da in diesem Fall die Ansprechschwelle deutlich höher als die Amplitude des Empfangssignals ist.

Die Sendeenergie im Diagnosebetrieb kann auch durch Verringerung der Sendepulsbreite oder der Amplitude des Sendepulses reduziert werden. Die Variation der Sendepulsbreite ist sehr einfach realisierbar, beispielsweise durch Programmierung des Mikrocontrollers 3. Sie bietet zudem den Vorteil, daß das Ausschwingverhalten des Ultraschallwandlers 1 oder 2 für unterschiedliche Anregungen bewertet werden kann. Auf diese Weise sind zusätzliche Informationen über den Zustand des Wandlers ableitbar.

Ein Empfangssignal 18 am Ausgang des Empfangsverstärkers 11 wird sowohl dem Demodulator 13 als auch dem Empfangskomparator 15 zugeführt. Der Mikrocontroller 3 legt durch ein Steuersignal 19 das Meßfenster fest, indem die Torschaltung 16 durch dieses Steuersignal freigeschaltet wird. Somit gelangen nur innerhalb des Meßfensters Impulse vom Ausgang des Empfangskomparators 15 zu dem Zähler 17. Durch das Meßfenster wird ebenfalls die Hüllkurvenauswertung 14 zur Ermittlung eines Signalformparameters aktiviert, den diese an den Mikrocontroller 3 übergibt. Dieser Signalformparameter wird im Mikrocontroller 3 zum Selbsttest in der Betriebsart "Diagnose" ausgewertet. Der Mikrocontroller 3 überprüft den Signalformparameter auf Einhalten eines Fehlerkriteriums. Liegt ein Fehler vor, so erzeugt er eine Fehlermeldung, die zur Anzeige des Fehlers an eine in Figur 1 nicht dargestellte übergeordnete Steuereinheit ausgegeben wird. Die Art des Fehlerkriteriums und der Aufbau der Fehlermeldung sind ebenso wie der gesamte Ablauf des Meß- und Diagnoseverfahrens durch die Programmierung des Mikrocontrollers 3 festgelegt.

Für die qualitativen Signalverläufe in Figur 2 wurden dieselben Bezugszeichen wie für die jeweils zugeordneten Signale in Figur 1 verwendet. Eine Ausnahme bildet das Empfangssignal 18, für das je nach Zustand des Ultraschall-Durchflußmessers in Figur 2 die Bezugszeichen 18A, 18B, 18C und 18D verwendet werden.

Im Normalfall, d. h. wenn beide Ultraschallwandler korrekt arbeiten und die Meßstrecke ungestört ist, hat das Empfangssignal den Verlauf 18A. Zu Beginn einer Ultraschall-Laufzeitmessung werden die Steuersignale 4 und 5 auf "Low"-Pegel gelegt, d. h., es wird stromab gemessen, und ein Sendeimpuls des Ultraschallwandlers 2 durch einen Impuls auf der Steuerleitung 10 erzeugt. Zu Beginn des wahrscheinlichen Eintreffzeitpunkts des Impulszuges beim Ultraschallwandler 1 wird durch eine positive Flanke 21 des Steuersignals 19 ein Meßfenster aktiviert. Als Empfangssignal 18A erscheint daraufhin eine Gruppe 22, die aus ansteigenden und wieder abfallenden Schwingungen besteht. Aus dem Zeitpunkt des Eintreffens der Schwingungen wird mit dem Mikrocontroller 3 (Figur 1) die Laufzeit stromab ermittelt. Zur Vervollständigung einer Laufzeitdifferenzmessung wird nun durch Änderung des Pegels der beiden Steuersignale 4 und 5 mit Flanken 23 bzw. 24 und durch Ausgabe eines Impulses 25 eine Messung stromauf eingeleitet. Bei Eintreffen des Ultraschallimpulses beim Ultraschallwandler 2 erscheint in ähnlicher Weise wie bei der Messung stromab eine Gruppe 26 ansteigender und wieder abfallender Schwingungen, anhand welcher die Laufzeit des Ultraschallimpulses stromauf ermittelt wird. Aus der Differenz der Laufzeiten stromab und stromauf kann auf die Fließgeschwindigkeit eines Mediums in einem Meßrohr, an welchem die beiden Ultraschallwandler 1 und 2 angebracht sind, geschlossen werden.

In vorgegebenen Zeitintervallen wird die Betriebsart des Ultraschall-Durchflußmessers von "Messen", die in Figur 2 während der Zeitabschnitte T1 und T3 eingestellt ist, in eine Betriebsart "Diagnose", in Figur 2 während eines Zeitabschnitts T2, umgeschaltet. Eingeleitet wird der Selbsttest des Ultraschallwandlers 1 durch eine negative Flanke 27 des Steuersignals 5, nach welcher der Ultraschallwandler 1 sowohl mit der Sendeschaltung als auch mit der Empfangsschaltung verbunden ist, und einen Impuls 28 auf dem Steuersignal 10, durch welchen der Ultraschallwandler 1 zu Schwingungen angeregt wird. Nach dem Ende des Impulses 28, d. h. nach dem Ende des Sendevorgangs, wird durch eine positive Flanke 29 des Steuersignals 19 ein Meßfenster geöffnet. Bereits zu Beginn des Impulses 28 erscheint auf dem Empfangssignal 18A eine Gruppe 30 abklingender Schwingungen, die für den verwendeten Ultraschallwandler 1 charakteristisch und damit zur Beurteilung seiner Eigenschaften geeignet ist. Der Verlauf der positiven Einhüllenden der Gruppe 30 ist durch eine gestrichelte Linie 31 in Figur 2 angedeutet. Zum Selbsttest des Ultraschallwandlers 2 werden die beiden Schalter 7 und 8 durch eine negative Flanke 32 und eine positive Flanke 33 auf den Steuersignalen 4 bzw. 5 umgelegt und ein Impuls 34 auf dem Steuersignal 10 ausgegeben. Da die beiden Ultraschallwandler 1 und 2 vom selben Typ sind und sich in vergleichbarem Zustand befinden, ähnelt eine nun aufgezeichnete Gruppe 35 abklingender Schwingungen der Gruppe 30, die beim Selbsttest des Ultraschallwandlers 2 empfangen wurde.

Nach Abschluß des Selbsttests wird wieder in die Betriebsart "Messen" umgeschaltet und in den Zeitabschnitt T3 eingetreten. Die Zeitverläufe der Signale während des Zeitabschnitts T3 entsprechen wieder denjenigen des Zeitabschnitts T1, die ebenfalls während der Betriebsart "Messen" aufgenommen wurden.

Der Verlauf 18B des Empfangssignals zeigt den Fehlerfall, daß beide Ultraschallwandler 1 und 2 in Ordnung sind, die Meßstrecke aber gestört ist. Dadurch erreichen die stromab und stromauf gesendeten Ultraschallimpulse nicht den jeweiligen Empfangswandler und es erscheinen während des Meßbetriebs in den Abschnitten T1 und T3 keine Schwingungsgruppen als Empfangssignal. Der Empfang zweier Schwingungsgruppen 36 und 37 beim Selbsttest der Ultraschallwandler 1 bzw. 2 zeigt deutlich an, daß diese korrekt arbeiten und der Ausfall eines Empfangssignals im Meßbetrieb auf eine Störung der Strecke zurückzuführen ist.

Der Verlauf 18C des Empfangssignals 18 tritt dagegen auf, wenn der Ultraschallwandler 2 defekt ist. In diesem Fall wird lediglich eine Schwingungsgruppe 38 für den Selbsttest des Ultraschallwandlers 1 im Diagnosebetrieb empfangen.

Am Verlauf 18D des Empfangssignals 18 kann ein abweichendes Verhalten der beiden Ultraschallwandler 1 und 2 festgestellt werden. Während der Betriebsart "Messen" in den Zeitabschnitten T1 und T3 werden zwar weiterhin Schwingungsgruppen 39, 40 und 41 empfangen, ihre Amplituden sind aber geringer als im ungestörten Betrieb. In der Betriebsart "Diagnose" kann die Ursache dafür festgestellt werden. Die Amplitude des dem Sendevorgang folgenden Nachschwingens des Ultraschallwandlers 1 hat sich erheblich verringert und es wird daher eine Schwingungsgruppe 42 aufgezeichnet, deren Einhüllende 43 sehr viel flacher verläuft als eine Einhüllende 44 einer beim Selbsttest des Ultraschallwandlers 2 aufgezeichneten Schwingungsgruppe 45. Eine vergleichende Bewertung der Schwingungsgruppen 42 und 45 kann hier zu einer Schadensfrüherkennung herangezogen werden. Auch Aussagen zur Meßsicherheit oder zu Einschränkungen der Meßgenauigkeit sind daraus ableitbar. Bei unzulässigen Abweichungen wird ein entsprechendes Fehlersignal generiert. Ein einfachster Test besteht darin zu prüfen, ob der Empfangskomparator 15 (Figur 1) während des Meßfensters anspricht.

Eine weitere Möglichkeit zur Auswertung besteht darin, daß der Anfang des Meßfensters nacheinander so variiert wird, daß durch den Empfangskomparator 15 jeweils die nächstfolgende Signalschwingung detektiert wird. Vorzugsweise wird der Zeitpunkt des Signalnulldurchgangs gemessen. Die so ermittelten Zeiten werden gespeichert und die Differenz zum Zeitpunkt des jeweils vorhergehenden Signalnulldurchgangs berechnet. Auf diese Weise ist eine einfache Frequenzüberwachung möglich. Aus der gemessenen Eigenfrequenz eines Ultraschallwandlers können wiederum Aussagen über seinen Zustand abgeleitet werden. Zudem kann mit dieser Vorgehensweise die gesamte Abklingzeit bis zur Unterschreitung eines vorgebbaren Pegels gemessen werden.

Anhand der in der Betriebsart "Diagnose" gewonnenen Schwingungsgruppen erfolgen Messung, Speicherung und Auswertung von ausgewählten Signalformparametern, z. B. Amplitude, integraler Energieinhalt oder Abklinggradient der Einhüllenden. Vorzugsweise werden die Schwingungsgruppen nur innerhalb des Meßfensters ausgewertet. Diese Signalformparameter können mit zuvor im Mikrocontroller 3 abgespeicherten Referenzwerten oder mit aus der Vergangenheit ermittelten Werten zur Feststellung von unzulässigen Abweichungen bzw. Veränderungen verglichen werden.

## Patentansprüche

1. Verfahren zum Selbsttest einer Einrichtung zur Ultraschall-Laufzeitmessung, insbesondere eines Ultraschall-Durchflußmessers,
**dadurch gekennzeichnet,**
- daß das Ausschwingverhalten eines Ultraschallwandlers (1, 2) nach einem Sendevorgang ausgewertet und daraus zumindest ein Signalformparameter ermittelt wird,
- daß der Signalformparameter auf Einhalten eines Fehlerkriteriums überprüft wird und
- daß bei Verletzen des Fehlerkriteriums eine Fehlermeldung erzeugt und zur Anzeige eines Fehlers ausgegeben wird.

2. Verfahren nach Anspruch 1, **dadurch gekennzeichnet,**
- daß als Fehlerkriterium der Signalformparameter mit einem abgespeicherten Referenzwert verglichen wird.

3. Verfahren nach Anspruch 2, **dadurch gekennzeichnet,**
- daß der Referenzwert aus früher ermittelten Signalformparametern abgeleitet ist.

4. Verfahren nach Anspruch 3, **dadurch gekennzeichnet,**
- daß der Referenzwert aus einem für einen anderen Ultraschallwandler (2, 1) ermittelten Signalformparameter ermittelt wird.

5. Verfahren nach einem der vorhergehenden Ansprüche, **dadurch gekennzeichnet,**
- daß der Selbsttest zyklisch in vorgegebenen Zeitintervallen durchgeführt wird.

6. Verfahren nach einem der vorhergehenden Ansprüche, **dadurch gekennzeichnet,**
- daß als Signalformparameter die Amplitude, der integrale Energieinhalt oder der Abklinggradient der Einhüllenden der Schwingungen nach dem Sendevorgang ermittelt wird.

7. Verfahren nach einem der Ansprüche 1 bis 5, **dadurch gekennzeichnet,**
- daß das Ausschwingverhalten lediglich während eines Meßfensters ausgewertet wird, dessen zeitliche Lage und Dauer einstellbar ist.

8. Verfahren nach Anspruch 7, **dadurch gekennzeichnet,**
- daß der Beginn des Meßfensters variiert und jeweils die Lage des ersten Signalnulldurchgangs ermittelt wird und
- daß als Signalformparameter aus dem Abstand der Signalnulldurchgänge die Frequenz der Schwingungen ermittelt wird.

9. Verfahren nach Anspruch 7, **dadurch gekennzeichnet,**
- daß der Beginn des Meßfensters variiert und das Signal während des Meßfensters auf Überschreiten eines vorgegebenen Pegels überwacht wird und
- daß als Signalformparameter die Abklingzeit bis zur Unterschreitung des vorgegebenen Pegels ermittelt wird.

10. Verfahren nach einem der vorhergehenden Ansprüche, **dadurch gekennzeichnet,**
- daß für den Selbsttest die Sendeenergie, insbesondere die Amplitude oder die Dauer des Sendeimpulses, variiert wird.

11. Einrichtung zur Durchführung des Verfahrens nach einem der vorhergehenden Ansprüche
- mit zumindest einem Ultraschallwandler (1, 2), dessen Anschlußleitungen mit einer Sendeschaltung und/oder einer Empfangsschaltung verbindbar sind,
**gekennzeichnet durch:**
- Mittel zum Auswerten des Ausschwingverhaltens des Ultraschallwandlers nach einem Sendevorgang und zum Ermitteln zumindest eines Signalformparameters,
- Mittel zum Überprüfen des Signalformparameters auf Einhalten eines Fehlerkriteriums und
- Mittel zum Erzeugen einer Fehlermeldung bei Verletzen des Fehlerkriteriums und zur Ausgabe der Fehlermeldung zur Anzeige eines Fehlers.

12. Einrichtung nach Anspruch 11, **gekennzeichnet durch:**
- zwei Ultraschallwandler zur Ultraschall-Durchflußmessung, die in einer Betriebsart "Messen" zur Laufzeitmessung jeweils mit der Sendeschaltung und mit der Empfangsschaltung verbindbar sind und von denen einer in einer Betriebsart "Diagnose" zur Auswertung des Ausschwingverhaltens nach dem Sendevorgang sowohl mit der Sendeschaltung als auch mit der Empfangsschaltung verbindbar ist.

13. Einrichtung nach Anspruch 11, **gekennzeichnet durch:**
- eine Steuereinheit (3), die zwei voneinander unabhängige Steuersignale (4, 5) zur Ansteuerung zweier Schalter (7, 8) liefert, mit denen jeweils ein Ultraschallwandler (1, 2) wahlweise mit der Empfangsschaltung oder mit der Sendeschaltung verbindbar ist.

14. Einrichtung nach einem der Ansprüche 11 bis 13, **dadurch gekennzeichnet,**
- daß die Empfangsschaltung durch ein Steuersignal (19) während eines Meßfensters freischaltbar ist.

15. Einrichtung nach einem der Ansprüche 11 bis 14, **dadurch gekennzeichnet,**
- daß die Empfangsschaltung mit einer Schaltung (12) zur Begrenzung des Eingangssignalpegels versehen ist.
